Europäisches Patentamt

European Patent Office

Office européen des brevets

(19)

(11) Numéro de publication : **0 047 214**
**B2**

(12) # NOUVEAU FASCICULE DE BREVET EUROPÉEN

(45) Date de publication du nouveau fascicule du brevet : 25.03.87

(51) Int. Cl.⁴ : **H 02 B 13/02**, H 02 G 5/08

(21) Numéro de dépôt : 81401364.5

(22) Date de dépôt : 31.08.81

(54) Dispositif de connexion de deux jeux de barres triphasées logés dans des enveloppes orthogonales d'une installation électrique blindée à haute tension et à isolement gazeux.

(30) Priorité : 03.09.80 JP 124334/80 U

(43) Date de publication de la demande :
10.03.82 Bulletin 82/10

(45) Mention de la délivrance du brevet :
25.07.84 Bulletin 84/30

(45) Mention de la décision concernant l'opposition :
25.03.87 Bulletin 87/13

(84) Etats contractants désignés :
BE CH DE FR GB IT LI LU NL SE

(56) Documents cités :
DE-A- 2 720 325
FR-A- 2 346 884
FR-A- 2 379 900

(73) Titulaire : **MERLIN GERIN**
**Rue Henri Tarze**
**F-38050 Grenoble Cédex (FR)**

(72) Inventeur : **Tanimura, Ken-Ichi**
**Nissin Electric Co. Ltd. 47, Umezu-Takase-cho**
**Ukyo-ku Kyoto (JP)**

(74) Mandataire : **Kern, Paul et al**
**Merlin Gerin Sce. Brevets 20, rue Henri Tarze**
**F-38050 Grenoble Cedex (FR)**

EP 0 047 214 B2

## Description

L'invention concerne un dispositif de connexion de conducteurs triphasés d'une installation blindée à haute tension isolée par un gaz isolant à rigidité diélectrique élevée, notamment de l'hexafluorure de soufre, et comprenant :

un premier jeu de barres triphasées s'étendant selon les arêtes parallèles d'un prisme triangulaire à l'intérieur d'une première enveloppe tubulaire remplie dudit gaz,

un deuxième jeu de barres triphasées agencé d'une manière similaire selon les arêtes parallèles d'un prisme à l'intérieur d'une deuxième enveloppe tubulaire remplie dudit gaz et s'étendant orthogonalement à la direction de la première enveloppe,

un carter auxiliaire creux de raccordement des première et deuxième enveloppes orthogonales, et renfermant trois conducteurs de liaison pour l'interconnexion des barres de phases correspondantes desdits premier et deuxième jeux, deux conducteurs de liaison des barres appartenant aux deuxième et troisième phases s'étendant parallèlement entre eux à l'intérieur du carter selon une direction rectiligne perpendiculaire à la direction desdites barres.

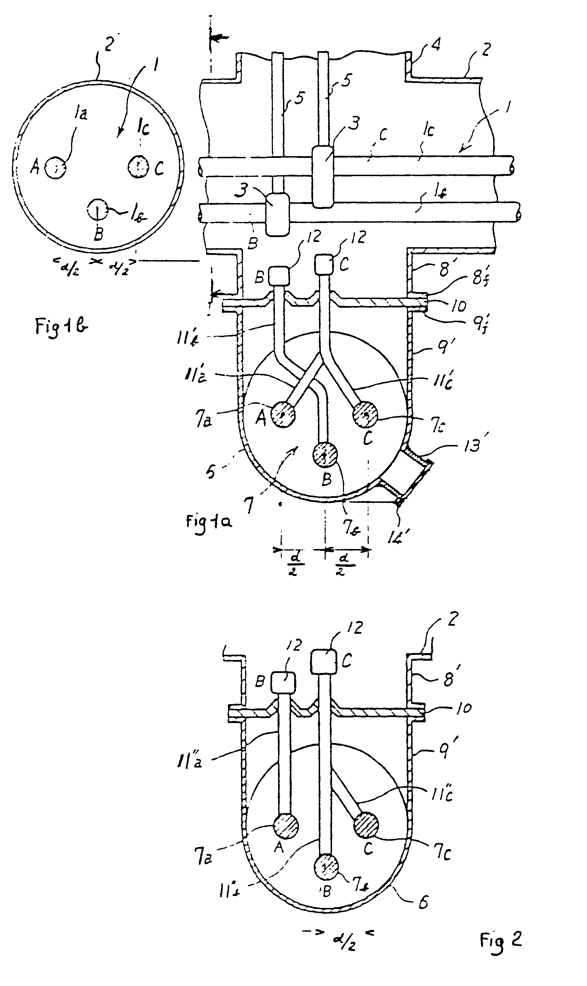

Selon un dispositif connu du genre mentionné, illustré aux figures 1a et 1b, les différentes phases de l'installation, notamment un poste blindé triphasé à haute tension, sont représentées par les lettres A, B et C. La figure 1b est une vue en coupe selon la ligne I-I de la figure 1a. Les barres triphasées 1a, 1b, 1c du premier jeu 1 s'étendent longitudinalement selon les arêtes d'un prisme dans une enveloppe 2 tubulaire remplie de SF 6. Le deuxième jeu 7 de barres triphasées 7a, 7b, 7c, est logé dans l'enveloppe 6 orthogonale remplie de SF 6 et le carter 9' auxiliaire solidaire de l'enveloppe 6 comporte une bride 9'f accolée à une bride 8'f de l'enveloppe 2, par l'intermédiaire d'un isolateur 10 de forme discoïdale. Le carter 9' cylindrique sert de moyen de communication entre les deux enveloppes 2, 7, orthogonales et renferme les conducteurs de liaison 11'a, 11'b, 11'c, supportés par l'isolateur 10. Les barres triphasées 1a, 1b, 1c ; 7a, 7b, 7c des deux jeux 1, 7, sont disposées dans les enveloppes 2, 7, correspondantes selon les mêmes ordre et sens de succession des phases A, B, C. Les extrémités des conducteurs de liaison 11'a, 11'b, 11'c sont dotées de plots de raccordement 12 coopérant avec des broches 5 mobiles d'un sectionneur (non représenté) triphasé susceptible de connecter ou de déconnecter les deux jeux de barres 1, 7. Un orifice 13' obturé par un couvercle 14' est ménagé dans l'enveloppe 6 pour autoriser l'accès du jeu de barres 7 au niveau du raccordement avec les conducteurs de liaison 11'a, 11'b, 11'c. On remarque que les trois conducteurs de liaison 11'a, 11'b, 11'c sont obligatoirement déformés par pliage pour respecter d'une part l'ordre de succession des phases A, B, C, des barres 1a, 1b, 1c ; 7a, 7b, 7c des deux jeux 1, 7 et d'autre part le décalage transversal approprié à une bonne tenue diélectrique entre les conducteurs à l'intérieur du carter 9' et de l'enveloppe 6. Les deux conducteurs de liaison 11'a, 11'c raccordés respectivement aux barres 7a, 7c du jeu 7 sont pliés en sens inverse l'un de l'autre dans la partie médiane tel que leurs portions terminées par les plots 12 soient situées avec la barre 7b dans le plan axial du carter 9' perpendiculaire à l'isolateur support 10. Les barres 7a, 7c parallèles sont séparées chacune du plan axial passant par la barre 7b d'un intervalle identique de longueur d/2. Le rayon de courbure de chaque conducteur de liaison 11'a, 11'c est petit, car il dépend de la longueur d/2 de cet intervalle. Le conducteur de liaison 11'b de la phase B intercalé entre la barre 7b du jeu 7 et la barre 1b du jeu 1 comprend deux plis réunis entre eux par une portion centrale oblique.

La mise en forme de tels conducteurs de liaison 11'a, 11'b, 11'c est compliquée et augmente le coût de fabrication et le temps de montage de l'installation électrique blindée.

Sur la figure 2, le carter 9', l'enveloppe 6 et l'isolateur support 10 présentent des dimensions et des formes identiques à celles utilisées dans le dispositif de la figure 1. Le remplacement des conducteurs de liaison 11'a, 11'b, 11'c par deux conducteurs 11"a, 11"b rectilignes raccordés aux barres 7a, 7b des phases A et B du jeu 7, et l'utilisation d'un seul conducteur 11"c courbe connecté à la barre 7c de la phase C du même jeu 7 ne permet pas de conserver le même ordre et sens de succession de phases au niveau du raccordement avec les barres 1a, 1b, 1c du jeu 1. Le rayon de courbure du conducteur 11"c est identique à celui du conducteur 11'c de la figure 1 et dépend de l'intervalle d/2 situé entre la barre 7c et le plan axial passant par la barre 7b.

Le document DE-A-2 720 325 est relatif à un dispositif de connexion de deux jeux de barres triphasées, dans lequel deux conducteurs de liaison s'étendent parallèlement entre eux, alors que le troisième possède une partie terminale rectiligne, agencé selon une direction oblique par rapport à la direction des deux premiers conducteurs parallèles. L'inclinaison du troisième conducteur de liaison dépend de la distance de séparation entre les deux conducteurs parallèles. L'enveloppe du jeu de barres, et le carter de logement des conducteurs de liaison présentent le même plan diamétral. Un tel agencement entraîne une modification de l'ordre ou du sens de succession des conducteurs de phase entre les deux jeux de barres, et il en résulte des difficultés de repérage des barres à raccorder lors du montage du poste blindé.

Le but de l'invention consiste à remédier aux inconvénients précités et à réaliser un dispositif de connexion simple de deux jeux de barres triphasés et orthogonaux sans changement de l'ordre et du sens de succession des phases.

Le dispositif de connexion est caractérisé par le fait que deux conducteurs de liaison 11b, 11c des barres 7b, 7c ; 1b, 1c appartenant aux phases B et C s'étendent parallèlement entre eux à l'intérieur du carter 9 selon une direction rectiligne perpendiculaire à la direction desdites barres, et que le troisième conducteur de liaison 11 a associé aux barres 7a, 1a, de la phase A présente une forme incurvée dont le rayon de courbure dépend de l'intervalle transversal d ménagé entre les barres (7a, 7c) appartenant aux phases A et C du deuxième jeu (7) triphasé, lesdites barres (7a, 7c) étant symétriques par rapport à un plan diamétral de la deuxième enveloppe (6) passant par la barre (7b) appartenant à la phase B dudit deuxième jeu (7) triphasé.

L'un des conducteurs de liaison rectiligne est avantageusement situé dans le plan diamétral de la deuxième enveloppe, et le conducteur de liaison de forme incurvée traverse de part et d'autre ledit plan.

Le carter auxiliaire de logement des conducteurs de liaison présente une surface latérale gauche agencée pour être décalée du plan diamétral de la deuxième enveloppe tubulaire dans la direction d'extension du premier jeu de barres.

D'autres avantages et caractéristiques ressortiront plus clairement de l'exposé qui va suivre d'un mode de mise en œuvre de l'invention, représenté aux dessins annexés dans lesquels :

la figure 3a est une vue schématique partielle identique à celle de la figure 1a, d'un dispositif de connexion selon l'invention, montré en coupe ;

la figure 3b est une vue en coupe selon la ligne III-III de la figure 3a.

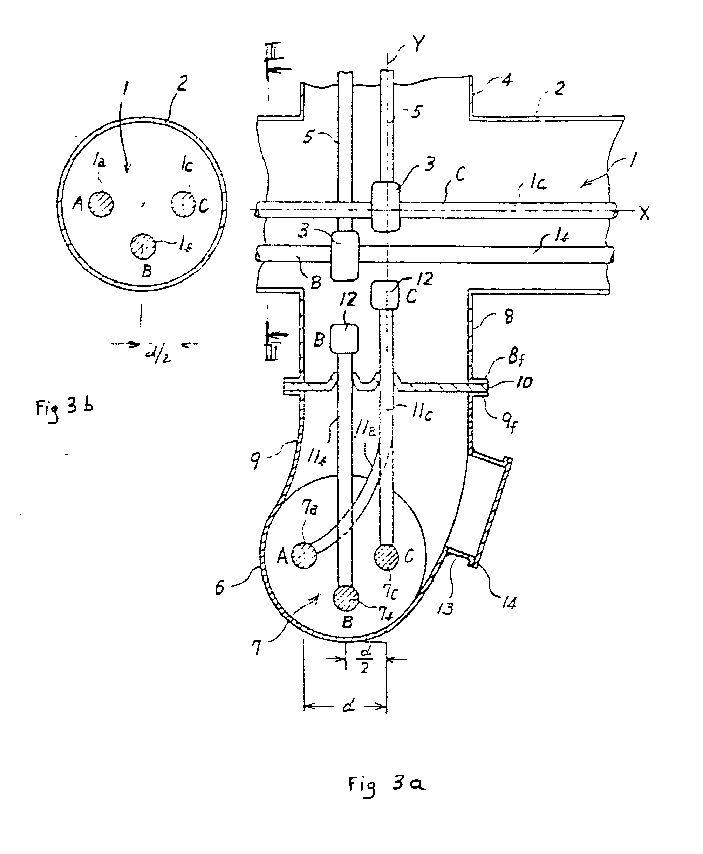

Les mêmes repères seront utilisés pour désigner des pièces identiques ou similaires à celles des figures 1 à 2, qui ne seront plus décrites en détail par la suite. La figure 3b est identique à celle de la figure 1b et montre l'agencement des barres 1a, 1b, 1c du jeu 1 à l'intérieur de l'enveloppe 2 tubulaire. Les formes et dimensions de l'isolateur support 10 et de l'enveloppe 6 orthogonale de logement des barres 7a, 7b, 7c triphasées du jeu 7 sont également identiques à celles de la figure 1a.

Le carter 9' tubulaire droit du dispositif de la figure 1a est remplacé par un carter 9 tubulaire incurvé, agencé pour assurer un décalage en translation vers la gauche de l'enveloppe 6 et du jeu de barres 7, par rapport à ceux de la figure 1a. La forme du carter 9 est telle que le décalage correspond à l'intervalle d/2 est opéré dans la direction axiale X de l'enveloppe 2. Il en résulte que les conducteurs de liaison 11b et 11c sont rectilignes, car les barres 7b et 7c du jeu 7 sont placées dans l'alignement selon la direction axiale Y de l'isolateur 10 avec les plots 12 des phases B et C correspondantes du jeu 1. La barre 7a est séparée du plan axial de trace Y par l'intervalle d. Le conducteur 11c est disposé dans le même plan axial de trace Y séparé par l'intervalle d/2 du conducteur 11b rectiligne et parallèle.

Le conducteur de liaison 11a interconnecté entre la barre 7a du jeu 7 et le plot 12 de la phase A est incurvé, et son rayon de courbure, fonction de l'intervalle d, est nettement supérieur à celui du conducteur 11'a de la figure 1a. La réalisation du conducteur 11a est facile et l'ordre et le sens de succession des phases A, B, C des deux jeux 1 et 7 orthogonaux sont conservés.

L'orifice 13 obturé par le couvercle 14 est reporté sur la face la plus longue du carter 9 incurvé.

Le dispositif de connexion selon les figures 3a et 3b a été décrit en référence à un sectionneur à broches 5 mobiles d'interconnexion des deux jeux de barres 1, 7 orthogonaux. L'invention s'applique également à un dispositif de connexion dont les conducteurs de liaison 11a, 11b, 11c, du jeu de barres 7 sont connectés à demeure aux plots 3 fixes de raccordement des phases correspondantes du jeu de barres 1.

**Revendications**

1. Dispositif de connexion de conducteurs triphasés d'une installation blindée à haute tension isolée par un gaz isolant à rigidité diélectrique élevée, notamment de l'hexafluorure de soufre et comprenant :

un premier jeu (1) de barres triphasées (1a, 1b, 1c) s'étendant selon les arêtes parallèles d'un prisme triangulaire à l'intérieur d'une première enveloppe (2) tubulaire remplie dudit gaz,

un deuxième jeu (7) de barres triphasées (7a, 7b, 7c) agencé d'une manière similaire selon les arêtes parallèles d'un prisme à l'intérieur d'une deuxième enveloppe (6) tubulaire remplie dudit gaz et s'étendant orthogonalement à la direction de la première enveloppe (2),

un carter (9, 9') auxiliaire creux de raccordement des première et deuxième enveloppes (2, 6) orthogonales, et renfermant trois conducteurs de liaison (11a, 11b, 11c ; 11'a, 11'b, 11'c) pour l'interconnexion des barres (1a, 1b, 1c ; 7a, 7b, 7c) de phases correspondantes A, B, C desdits premier et deuxième jeux (1, 7), deux conducteurs de liaison (11b, 11c) des barres (7b, 7c ; 1b, 1c) appartenant aux deuxième et troisième phases B et C s'étendant parallèlement entre eux à l'intérieur du carter (9) selon une direction rectiligne perpendiculaire à la direction desdites barres, caractérisé en ce que le troisième conducteur de liaison (11a) associé aux barres (7a, 1a) de la première phase A présente une forme incurvée dont le rayon de courbure dépend de l'intervalle transversal (d) ménagé entre les barres (7a, 7c) appartenant aux première et troisième phases A et C du deuxième jeu (7) triphasé et que lesdites barres (7a, 7c) sont symétriques par rapport à un plan diamétral de la deuxième enveloppe (6) passant par la barre (7b) appartenant à la deuxième phase B dudit deuxième jeu (7) triphasé.

2. Dispositif de connexion de conducteurs triphasés selon la revendication 1, caractérisé en ce que l'un (11b) des conducteurs de liaison rectilignes est situé dans ledit plan diamétral traversé de part et d'autre par le troisième conducteur de liaison (11a) incurvé.

3. Dispositif de connexion de conducteurs triphasés selon la revendication 1 ou 2, caractérisé en ce que ledit plan diamétral de l'enveloppe (6) tubulaire du deuxième jeu de barres (7) est décalé par rapport au centre d'une section du carter auxiliaire (9) perpendiculaire audit plan diamétral dans la direction d'extension des barres du premier jeu (1) pour le logement des conducteurs de liaison (11a, 11b, 11c) permettant de conserver l'ordre et le sens de succession des phases A, B, C.

4. Dispositif de connexion de conducteurs triphasés selon la revendication 3, dans lequel le carter (9) auxiliaire est assujetti à la première enveloppe (2) par l'intermédiaire d'un isolateur (10) servant de support aux conducteurs de liaison (11a, 11b, 11c) caractérisé en ce que le conducteur de liaison (11c) rectiligne appartenant à la troisième phase C est agencé dans le plan axial de l'isolateur (10), et en ce que le plan diamétral de l'enveloppe (6) s'étend parallèlement audit plan axial de l'isolateur (10) en étant séparé l'un de l'autre par une distance correspondante à la moitié de l'intervalle (d) ménagé entre les barres (7a, 7c) appartenant aux première et troisième phases A et C du deuxième jeu (7) triphasé.

5. Dispositif de connexion de conducteurs triphasés selon la revendication 4, caractérisé en ce que le troisième conducteur de liaison (11a) incurvé présente une partie droite située dans le plan axial de l'isolateur (10).

6. Dispositif de connexion de conducteurs triphasés selon la revendication 4 ou 5, caractérisé en ce que le carter (9) auxiliaire de logement des conducteurs de liaison (11a, 11b, 11c) présente une surface latérale gauche.

7. Dispositif de connexion selon la revendication 6, caractérisé en ce que le carter (9) comprend une face convexe dotée d'un orifice (13) obturé par un couvercle (14).

**Claims**

1. Device to connect three-phase conductors of a high voltage metal-clad installation insulated by an insulating gas with high dielectric strength, especially sulfur hexafluoride and comprising :
a first set (1) of three-phase bars (1a, 1b, 1c) extending according to the parallel edges of a triangular prism inside a first tubular casing (2) filled with said gas,
a second set (7) of three-phase bars (7a, 7b, 7c) disposed according to the parallel edges of a prism in a similar way inside a second tubular casing (6) filled with said gas and extending orthogonally to the direction of the first casing (2),
a holow auxiliary enclosure (9, 9') to connect the first and second orthogonal casings (2, 6), and containing three connection conductors (11a, 11b, 11c ; 11'a, 11'b, 11'c) for the interconnection of the bars (1a, 1b, 1c ; 7a, 7b, 7c) of corresponding phases A, B, C of said first and second sets (1, 7), two connection conductors (11b, 11c) of the bars (7b, 7c ; 1b, 1c) belonging to the second and third phases B and C extending parallel between them inside the enclosure (9) according to a rectilinear direction perpendicular to the direction of said bars, characterized by the fact that the third connection conductor (11a) associated with the bars (7a, 1a) of the first phase A shows an incurvated shape, the curvature radius of which depends on the transverse gap d accommodated between the bars (7a, 7c) belonging to the first and third phases A and C of the second three-phase set (7) and that said bars (7a, 7c) are symmetrical relative to a plan diametrical to the second casing (6) running by the bar (7b) belonging to the second phase B of the second three-phase set (7).

2. Device to connect three-phase conductors according to claim 1, characterized in that one (11b) of the rectilinear connection conductors is located in said diametrical plan crossed on both sides by the third incurvated connection conductor (11a).

3. Device to connect three-phase conductors according to claim 1 or 2, characterized in that said diametrical plan of the tubular casing (6) of the second bars (7) set is shifted relative to the center of a section of the auxiliary enclosure (9) perpendicular to said diametrical plan in the extension direction of the first bars set (1) for the housing of the connection conductors (11a, 11b, 11c) allowing to keep the order and the sequence direction of phases A, B, C.

4. Device to connect three-phase conductors according to claim 3, in which the auxiliary enclosure (9) is fastened to the first casing (2) by means of an insulator (10) serving as support for the connection conductors (11a, 11b, 11c), characterized in that the rectilinear connection conductor (11c) belonging to phase C is disposed in the axial plan of the insulator (10), and that the diametrical plan of the casing (6) extends parallel to said axial plan of the insulator (10) by being apart one from the other by a distance corresponding to half of the gap (d) accommodated between the bars (7a, 7c) belonging to the first and third phases A and C of said second three-phase set (7).

5. Device to connect three-phase conductors according to claim 4, characterized in that the third incurvated connection conductor (11a) presents a straight part located in the axial plan of the insulator (10).

6. Device to connect three-phase conductors according to claim 4 or 5, characterized in that the auxiliary enclosure (9) to put the connection conductors (11a, 11b, 11c) presents a skew side-surface.

7. Connection device according to claim 6, characterized in that the enclosure (9) comprises a convex side with an aperture (13) sealed by a cover (14).

## Patentansprüche

1. Verbindungsvorrichtung für Dreiphasen-Leiter einer gekapselten Hochspannungs-Schaltanlage, die mit einem Gas hoher dielektrischer Festigkeit, insbesondere Schwefelhexafluorid, isoliert ist und die folgendes enthält :

einen ersten Strang (1) dreiphasiger Schienen (1a, 1b, 1c), die sich gemäss den parallelen Kanten eines dreieckigen Prismas im Innern eines ersten rohrförmigen gasgefüllten Behälters (2) erstrecken,

einen zweiten Strang (7) dreiphasiger Schienen (7a, 7b, 7c) in ähnlicher Weise gemäss den parallelen Kanten eines Prismas im Innern eines zweiten rohrförmigen gasgefüllten Behälters (6) angeordnet und sich orthogonal zur Richtung des ersten Behälters (2) erstreckend,

ein hohles Hilfsgehäuse (9, 9') zur Verbindung der orthogonalen ersten und zweiten Behälter (2, 6), das drei Verbindungsleiter (11a, 11b, 11c ; 11'a, 11'b, 11'c) enthält für die Verbindung der Schienen (1a, 1b, 1c ; 7a, 7b, 7c) der entsprechenden Phasen A, B, C der ersten und zweiten Stränge (1, 7), wobei zwei Verbindungsleiter (11b, 11c) der den ersten und dritten Phasen B und C zugehörigen Schienen (7b, 7c ; 1b, 1c) sich parallel zueinander im Innern des Gehäuses (9) erstrecken, gemäss einer geradlinigen, zur Richtung der genannten Schienen senkrechten Richtung, dadurch gekennzeichnet dass der den Schienen (7a, 1a) der ersten Phase A zugehörige dritte Verbindungsleiter (11a) eine gekrümmte Form aufweist, deren Krümmungsradius von dem transversalen Zwischenraum (d) abhängig ist, welcher zwischen den Schienen (7a, 7c) vorgesehen ist, die zu den ersten und dritten Phasen A und C des zweiten dreiphasigen Stranges (7) gehören, und dass die genannten Schienen (7a, 7c) symmetrisch sind gegenüber einer diametralen Ebene des zweiten Behälters (6), die durch die Schiene (7b) führt, welche zu der zweiten Phase B des genannten zweiten dreiphasigen Stranges (7) gehört.

2. Verbindungsvorrichtung für Dreiphasen-Leiter, gemäss Anspruch 1, dadurch gekennzeichnet, dass sich einer (11b) der geradlinigen Verbindungsleiter auf der genannten diametralen Ebene befindet, die beiderseits von dem gekrümmten dritten Verbindungsleiter (11a) durchquert wird.

3. Verbindungsvorrichtung für Dreiphsen-Leiter gemäss Anspruch 1 oder 2, dadurch gekennzeichnet, dass die genannte diametrale Ebene des rohrförmigen Behälters (6) des zweiten Sammelschienenstranges (7) gegenüber der Mitte eines Abschnittes des zu der genannten diametralen Ebene senkrechten Hilfsgehäuses (9) versetzt ist in die Ausdehnungsrichtung der Schienen des ersten Stranges (1) zur Unterbringung der Verbindungsleiter (11a, 11b, 11c), was die Beibehaltung der Reihenfolge und der Richtung der aufeinanderfolgenden Phasen A, B, C ermöglicht.

4. Verbindungsvorrichtung für Dreiphasen-Leiter gemäss Anspruch 3, in welcher das Hilfsgehäuse (9) dem ersten Behälter (2) zugeordnet ist, mittels eines Isolators (10), der den Verbindungsleitern (11a, 11b, 11c) als Stütze dient, dadurch gekennzeichnet, dass der rechtlinige, der Phase C zugehörige Verbindungsleiter (11c) auf der achsialen Ebene des Isolators (10) angeordnet ist, und dass sich die diametrale Ebene des Behälters (6) parallel zu der genannten achsialen Ebene des Isolators (10) erstreckt, wobei sie voneinander durch einen Abstand getrennt sind, der der Hälfte des Abstandes (d) entspricht, der zwischen den ersten und dritten Phasen A und C des zweiten dreiphasigen Stranges (7) zugehörigen Schienen (7a, 7c) liegt.

5. Verbindungsvorrichtung für Dreiphasen-Leiter, gemäss Anspruch 4, dadurch gekennzeichnet, dass der dritte gekrümmte Verbindungsleiter (11a) einen rechten auf der achsialen Ebene des Isolators (10) liegenden Teil aufweist.

6. Verbindungsvorrichtung für Dreiphasen-Leiter gemäss Anspruch 4 oder 5, dadurch gekennzeichnet, dass das Gehäuse (9) zur Unterbringung der Verbindungsleiter (11a, 11b, 11c) eine linke seitliche Oberfläche aufweist.

7. Verbindungsvorrichtung gemäss Anspruch 6, dadurch gekennzeichnet, dass das Gehäuse (9) eine konvexe Seite aufweist, die mit einer Öffnung (13) versehen ist, welche von einem Deckel (14) verschlossen wird.

Fig 1b

Fig 1a

Fig 2

Fig 3 b

Fig 3 a